Europäisches Patentamt

European Patent Office

Office européen des brevets

(11) Veröffentlichungsnummer : **0 106 081**
**B1**

(12) EUROPÄISCHE PATENTSCHRIFT

(45) Veröffentlichungstag der Patentschrift :
04.05.88

(51) Int. Cl.⁴ : **B 23 Q  3/157**

(21) Anmeldenummer : 83108471.0

(22) Anmeldetag : 27.08.83

(54) Werkzeugmaschine mit Werkzeugmagazin.

(30) Priorität : 13.09.82 DE 3233934
09.06.83 DE 3320851

(43) Veröffentlichungstag der Anmeldung :
25.04.84 Patentblatt 84/17

(45) Bekanntmachung des Hinweises auf die Patenterteilung : 04.05.88 Patentblatt 88/18

(84) Benannte Vertragsstaaten :
CH DE FR GB IT LI

(56) Entgegenhaltungen :
DE-A- 1 552 351
DE-A- 1 652 673
DE-A- 2 163 499
DE-A- 3 017 964
DE-B- 1 904 093
US-A- 3 590 470
US-A- 4 309 809
Patent Abstracts of Japan Band 4, Nr. 183, 17 Dezember 1980 & JP-A-55-131452

(73) Patentinhaber : Chiron-Werke GmbH
Talstrasse 23
D-7200 Tuttlingen (DE)

(72) Erfinder : Rütschle, Eugen
Schonenbergstrasse 20
D-7202 Mühlheim (DE)
Erfinder : Haninger, Rudolf
Obere Hauptstrasse 7
D-7201 Seitingen (DE)
Erfinder : Winkler, Hans-Henning
Brunnentalstrasse 88
D-7200 Tuttlingen (DE)

(74) Vertreter : Witte, Alexander, Dr.-Ing.
Schickhardtstrasse 24
D-7000 Stuttgart 1 (DE)

EP 0 106 081 B1

**Beschreibung**

Die Erfindung betrifft eine Werkzeugmaschine zum aufeinanderfolgenden Bearbeiten von Werkstücken mit verschiedenen Werkzeugen, die in eine Spindel eines Spindelstocks der Werkzeugmaschine einspannbar sind, wobei der Spindelstock an einem in zwei senkrecht zur Spindelachse gerichteten Koordinatenrichtungen relativ zum Werkstück verfahrbaren Tragelement gehalten und mit diesem in einer Richtung parallel zur Spindelachse verfahrbar ist, mit einem Magazin, in dem die Werkzeuge in Haltern gehalten sind, die um die Spindelachse herum verteilt angeordnet sind, wobei jeder Halter mittels einer eigenen Antriebsvorrichtung in eine mit der Spindelachse fluchtende Lage und in eine Lage außerhalb der Spindelachse bewegbar ist, wobei ferner die Halter und die Spindel in Richtung der Spindelachse relativ zueinander verschiebbar sind.

Eine derartige Werkzeugmaschine ist aus der DE-B-19 04 093 bekannt.

Die bekannte Werkzeugmaschine verfügt über einen Spindelstock mit horizontaler Spindelachse. Der Spindelstock ist an einem Kopf der Werkzeugmaschine axial verschieblich angeordnet. Mit dem Kopf ist starr ein torusartig um den Spindelstock herum angeordnetes Werkzeugmagazin verbunden. Das Werkzeugmagazin enthält an einer mit dem Kopf starr verbundenen Platte eine Mehrzahl von radial angeordneten schwenkbaren Haltearmen, an deren einem Ende jeweils eine Kolben-Zylinder-Einheit angreift und an derem anderen Ende jeweils eine Greifvorrichtung zum Ergreifen eines Werkzeughalters vorgesehen ist. In einer Magazinstellung befinden sich die Haltearme in einer eingeschwenkten Position, in der sie ebenso wie die Kolben-Zylinder-Einheiten in ewta radial zur Spindelachse angeordnet sind, so daß sich die Werkzeughalter mit ggf. darin gehaltenen Werkzeugen außerhalb der Spindelachse befinden. Zum Einwechseln eines Werkzeuges wird zunächst die Spindel in den Bereich des Magazins zurückgezogen und der Haltearm mit dem einzuwechselnden Werkzeug wird nach vorne aus der radialen Ebene des Magazins durch Betätigen der Kolben-Zylinder-Einheit herausgeschwenkt, so daß sich der Haltearm parallel zur Spindelachse befindet, und gleichzeitig wird ein am Ende des Haltearmes angeordneter, jetzt radial positionierter Hilfsantrieb betätigt, so daß insgesamt der Werkstückhalter mit eingesetztem Werkzeug in die Spindelachse gerät. Die Spindel wird nun so weit vorgefahren, daß ein Kegel des Werkzeughalters in eine dazu passende Aufnahme einer Spindel des Spindelstocks gerät, so daß der Werkzeughalter in bekannter Weise in der Spindel arretiert werden kann. Es werden nun zunächst die Greifelemente des Haltearmes am Werkstückhalter gelöst, dann wird der radial positionerte Hilfsantrieb zurückgefahren und schließlich wird der Haltearm durch Einziehen der Kolben-Zylinder-Einheit in seine radiale Ausgangslage zurückgeschwenkt. Jetzt kann die Spindel mit dem eingespannten Werkzeughalter nach vorne in eine Arbeitsstellung fahren, in der das Werkzeug in einem Werkstück arbeitet. Zum Auswechseln des Werkzeuges laufen entsprechende Bewegungsabläufe in umgekehrter Reihenfolge ab.

Die Werkzeugwechselzeit, d. h. die Zeit, die vom Abheben eines Werkzeuges aus der Arbeitsstellung am Werkstück bis zum Eintreffen des nächsten Werkzeuges am Werkstück vergeht, ist durch die Zahl und Dauer der verschiedenen Bewegungsabläufe bestimmt. Da bei der bekannten Werkzeugmaschine eine ganze Reihe von Bewegungsabläufen erforderlich ist, um einen Werkzeugwechsel durchzuführen, ist die Werkzeugwechselzeit entsprechend lang.

Bei einer anderen bekannten Werkzeugmaschine, wie sie in der DE-A-16 52 673 beschrieben ist, sind um den Umfang eines Spindelstocks herum mehrere parallel zur Spindelachse verfahrbare Wagen angeordnet, die mittels eines Kolbentriebes relativ zum Spindelstock axial verschiebbar sind. An dem der Aufnahme des Spindelstocks zugewandten vorderen Ende eines jeden Wagens befindet sich ein Tragarm mit Greifelementen zum Erfassen eines Werkzeugträgers. Der Tragarm ist in einer durch die Spindelachse gehenden Ebene verschwenkbar. In einer Magazinstellung ist der Tragarm um 90° nach außen aus einer zur Spindelachse parallelen Achse heraus verschwenkt, so daß in dieser Magazinstellung der Tragarm radial von der Spindelachse absteht. In dieser Magazinstellung ist der Wagen vom Aufnahmeende der Spindel weg in eine Endstellung verfahren. Um ein Werkzeug einzuwechseln, wird zunächst mittels des Kolbentriebes der Wagen in eine vordere Endstellung verfahren, es wird alsdann mittels eines weiteren Kolbentriebes und einer Zahnstangen-Zahnrad-Einheit der Tragarm um 180° gedreht, so daß das Werkzeug nun mit der Spindelachse fluchtet. Nach der Lehre der DE-OS 16 52 673 soll nun ein Kegel des Werkzeughalters sich in der Spindel des Spindelstocks befinden, was jedoch aufgrund der in der Zeichnung dargestellten Anordnung nicht möglich erscheint. Schließlich soll durch Zurückfahren des Wagens der Konus in der Spindelaufnahme eingerastet werden. Es sollen nun die Greifelemente am Ende des Tragarmes gelöst und der Tragarm wieder um 180° zurückgeschwenkt werden, wonach sich der Wagen vom Spindelende weg in die Magazinposition bewegt.

Auch bei dieser bekannten Werkzeugmaschine, sofern sie in eine funktionsfähige Form gebracht wird, ist daher eine Fülle von Bewegungsbläufen erforderlich, die aus den bereits gennanten Gründen zu einer langen Werkzeugwechselzeit führen.

Schließlich hat bei einer weiteren, aus der DE-A-30 17 964 bekannten Maschine das Magazin die Gestalt einer drehbar gelagerten Platte, in deren in den Rand mündenden Aussparungen die Werkzeuge radial eingesteckt sind. Durch einen mechanischen Antrieb wird zunächst die Spindel in eine vorgegebene Stellung verfahren und es wird dann die Magazinplatte an die Spindel herangefahren, wobei die Ränder der Werkzeugaufnahmeaussparungen das in der Spindel gehaltene Werkzeug ergreifen, dessen Spannung in der Spindel anschließend gelöst wird, worauf die Spindel weggefahren wird und die Magazinplatte zur Bereitstellung des nächsten zu verwendenden Werkzeugs verdreht wird. Anschließend fährt die Spindel wieder heran, und es wird das in der nächsten Werkzeugaufnahmeaussparung befindliche Werkzeug in der Spindel gespannt. Nach dem Zurückfahren der Magazinplatte in die Ausgangsstellung ist der Werkzeugwechsel beendet.

Bei dieser bekannten Maschine erfolgt der Werkzeugwechsel dann, wenn das im Magazin unmittelbar nächstfolgende Werkzeug benötigt wird, relativ rasch. Wird jedoch nach der Arbeit mit einem Werkzeug ein anderes Werkzeug benötigt, das sich in größerer Entfernung von dem Halter befindet, der das zuletzt benutzte Werkzeug hält, so muß das Magazin eine größere Drehbewegung ausführen, die längere Zeit in Anspruch nimmt. Insbesondere dann, wenn Werkzeuge für nur sehr kurze Zeit dauernde Arbeitsvorgänge häufig verwendet werden, beispielsweise zum Ansenken, entstehen bei dieser bekannten Maschine Wartezeiten. Dies gilt auch für solche Maschinen, bei denen zwischen dem Magazin und der Spindel ein Transporteur mit zwei Haltevorrichtungen angeordnet ist, der in der Lage ist, während der Arbeit des einen Werkzeugs aus dem Magazin, das sich inzwischen in eine geeignete Stellung dreht, das als nächstes benötigte Werkzeug zu entnehmen, so daß dieses unmittelbar nach dem Ausspannen des zuerst verwendeten Werkzeugs durch Drehung des Transporteurs um 180 Grad um eine im allgemeinen senkrechte Achse in die Spindel eingespannt werden kann.

Der Erfindung liegt demgegenüber die Aufgabe zugrunde, eine Werkzeugmaschine der eingangs geschilderten Art dahingehend weiterzubilden, daß die Werkzeugwechselzeit verkürzt wird.

Diese Aufgabe wird erfindungsgemäß dadurch gelöst, daß das Magazin längs der Spindelachse verfahrbar und in der Einführrichtung des Werkzeugs in die Spindel unter der Kraft eines elastischen Spannmittels an einem axialen Anschlag des Spindelstocks gehalten ist, so daß der Halter des jeweils ein- bzw. auszuwechselnden Werkzeugs den Bewegungen des Spindelstocks zwischen einer Werkzeugwechselposition und einer Bearbeitungsposition am Werkstück folgt und während der Arbeit des Werkzeugs in einer mit der Spindelachse fluchtenden Lage bleibt, und daß Mittel vorgesehen sind, um das Magazin zwecks Werkzeugwechsel und im Eingriff mit dem Werkzeug gegen die Kraft de elastischen Spannmittels vom axialen Anschlag abzuheben.

Die der Erfindung zugrundeliegende Aufgabe wird deswegen vollkommen gelöst, weil jedes Werkzeug aus einer Position, in der es in unmittelbarer Nähe der Spindel angeordnet ist, durch Betätigen der Antriebsvorrichtung auf kürzestem Wege in die Spannposition bzw. aus dieser herausgebracht werden kann. Daher ist die Zeit, die ein Werkzeugwechsel benötigt, wesentlich verkürzt, weil die Halter bei auszuspannendem Werkzeug nicht erst an dieses Werkzeug herangeschwenkt und bei einzuspannendem Werkzeug nicht später von diesem weggeschwenkt werden müssen und ein Lösen bzw. Spannen von Greifmitteln am Ende der Halter zum Festhalten des Werkzeugträgers bzw. zu dessen Lösen nicht mehr erforderlich ist.

Die Vorrichtung zum Bewirken einer Relativbewegung parallel zur Spindelachse zwecks Werkzeugwechel ist erforderlich, weil nach dem Entspannen zwischen dem Werkzeug und dem Spindelstock eine Relativbewegung stattfinden muß, um den Kegel des Werkzeuges aus der kegelförmigen Aufnahmeöffnung des Spindelstocks herauszubewegen. Um diese Relativbewegung zu erzielen, können an sich beliebige Antriebsvorrichtungen vorgesehen sein.

Bei der erfindungsgemäßen Werkzeugmaschine ist weiterhin günstig, daß die Vorteile der eingangs geschilderten Werkzeugmaschinen aufrechterhalten bleiben, nämlich die exakte Fixierung der einzelnen Werkzeuge in der Spindel, wodurch die Achsrichtungen sämtliche Werkzeuge dann, wenn sie sich in der Spindel befinden, übereinstimmen. Mit der Maschine ist daher ein hochgenaues Arbeiten möglich. Dabei müssen die Einrichtungen, die die Werkzeuge aus der Magazinposition in die Spannposition bringen, nicht hochgenau arbeiten, sondern lediglich so genau, daß sie das Werkzeug vor dem Spannen in einer Lage halten, in der es von dem Spannmechanismus der Spindel mit Sicherheit erfaßt und gespannt werden kann.

Mit der Aussage, daß sich während der Arbeit der Werkzeugmaschine der Halter des gerade benutzten Werkzeuges in einer mit der Spindelachse fluchtenden Lage befindet, wird nicht zwangsläufig vorgeschrieben, daß der Halter, in Längsrichtung der Spindelachse betrachtet, während der Tätigkeit der Werkzeugmaschine, bei der die Spindel im allgemeinen in ihre Längsrichtung (nachfolgend als Vertikalrichtung bezeichnet) Arbeitsbewegungen ausführt, relativ zur Spindel immer die gleiche Lage einnimmt. Jedoch führt der Halter etwaige Längs- und Querbewegungen der Spindel in einer waagerechten Ebene mit der zusammen aus, genauso wie die in der Magazinposition befindlichen Halter, die ihre ringförmige oder kreisförmige Lage rings um die Spindel beibehalten.

Ber einer Ausführungsform der Erfindung ist vorgesehen, daß die Halter in einem gemeinsamen Träger gehalten sind.

Diese Maßnahme hat den Vorteil, daß sich alle Werkzeuge gemeinsam in der Nähe der Spindel befinden, so daß die Verfahrwege beim Werkzeugwechsel für alle Werkzeuge gleich lang sind. Außerdem hat diese Maßnahme den Vorteil, daß sich das gesamte Werkzeugmagazin mit allen Werkzeugen mit der Spindel mitbewegt, so daß ggf. auch während der Spindelbewegung Auswechselvorgänge zumindest eingeleitet oder noch abgeschlossen werden können. Ferner ist von Vorteil, daß die einzelnen Werkzeuge in den Haltern unverlierbar, also sehr sicher, gehalten werden können, weil sich auch während der Arbeit der Maschine die relative Lage von Werkzeug und Halter kaum ändert. Eine derartige Änderung ist lediglich insofern vorhanden, als die meisten Spannvorrichtungen beim Spannen des Werkzeuges dieses, das im allgemeinen einen in die Spindel einzuführenden Kegel aufweist, um wenige Millimeter, beispielsweise 1 bis 3 mm, in eine dem Kegel entsprechende kegelförmige Aussparung des Spindelstocks hineinzuziehen, damit das Werkzeug eine genau definierte Lage einnimmt. Der Halter muß daher lediglich so ausgebildet sein, daß der diese relativ kleine Anhebbewegung des Werkzeugs erlaubt. Wenn soeben davon gesprochen wurde, daß die Werkzeuge im jeweiligen Halter unverlierbar gehalten sind, so schließt dies nicht aus, daß der Halter mit oder ohne Werkzeug leicht geöffnet werden kann, um ein im Magazin enthaltenes Werkzeug gegen ein anderes auszutauschen.

Bei einer weiteren Ausführungsform der Erfindung weist der Träger einen Rohrabschnitt auf, der auf einem zugeordneten Rohrabschnitt des Spindelstocks verschiebbar geführt ist.

Diese Maßnahme hat den Vorteil, daß auf besonders einfache Weise eine konzentrische Bewegung von Spindelstock einerseits und Träger andererseits möglich ist, bei der ein Verkanten nicht zu befürchten ist.

Bei einer weiteren Ausgestaltung der Erfindung ist der Anschlag als Schulter des Spindelstocks ausgebildet.

Auch diese Maßnahme hat den Vorteil eines besonders einfachen Aufbaues, insbesondere dann, wenn die Schulter als Ringschulter ausgebildet ist, weil sich dann der Rohrabschnitt über den gesamten Umfang an die Ringschulter anlegt und damit nicht nur eine definierte Endstellung definiert wird, sondern durch die über den ganzen Umfang gehende Anlage auch erreicht werden kann, daß sich der Rohrabschnitt exakt konzentrisch zur Spindelachse am Anschlag ausrichtet.

Besonders einfach sind die Spannmittel gemäß einer Ausführungsform der Erfindung durch mindestens eine Schraubenzugfeder, im Ausführungsbeispiel sind dies zwei Schraubenzugfedern, zu verwirklichen.

Derartige Spannmittel sind einfach und schnell herstellbar, ihre Wirksamkeit kann durch Augenschein stets leicht überprüft werden, und sie sind bei geeigneter Dimensionierung sehr dauerhaft. Außerdem ist die Wirksamkeit der Spannmittel hierbei nicht vom Vorhandensein irgendwelcher Fremdenergie abhängig. Bei dieser Konstruktion ist es möglich, den Rohrabschnitt, der ein Teil des Trägers ist, mittels der obengenannten Spannmittel oder soeben genannten Schraubenzugfedern am Spindelkopf aufzuhängen. Irgendwelche weitere Befestigungsmaßnahmen sind dabei nicht erforderlich. Wenn die Energiezufuhr zu den einzelnen Antriebsvorrichtungen der Halter über flexible Leitungen (Schlauchleitungen für Druckmittel oder elektrische Leitungen) erfolgt, so ist es für die sichere Funktion des Werkzeugwechsels an sich nicht erforderlich, daß die radiale Stellung der einzelnen Halter des Magazins relativ zur Spindelachse stets konstant ist. Aus praktischen Gründen jedoch, beispielsweise wegen des von der Spitze der Werkzeuge beim Werkzeugwechsel beschriebenen Wegs, der beim Einsatz der Maschine berücksichtigt werden muß, ist jedoch bei der einsatzbereiten Maschine die Stellung des Trägers relativ zum Spindelstock drehfest. Dies kann durch beliebige konstruktive Maßnahmen erzielt werden.

Bei einer weiteren Ausführungsform der Erfindung sind die Halter durch die elastischen Spannmittel so lange in Anlage an dem Anschlag des Spindelstockes gehalten, wie sich der Spindelstock in einer aus der Werkzeugwechselposition in Richtung der Spindelachse auf das Werkstück zu herausbewegten Position befindet, und es kommt dann, wenn der Spindelstock die Werkzeugwechselposition erreicht, der Halter des zu wechselnden Werkzeugs an einem in Richtung der Spindelachse wirkenden Anschlag zur Anlage, derart, daß der Halter während des weiteren Zurückfahrens des Spindelstocks zwecks Freigabe des Werkzeuges stillsteht.

Mit dieser Ausfürungsform lassen sich somit die an sich komplizierten Bewegungsvorgänge sehr einfach verwirklichen, weil durch Anlage der Halter am axialen Anschlag unter Spannen der Spannmittel der Spindelstock sich von selbst vom Werkzeugträger löst.

Bei einer Ausführungsform der Erfindung werden die Halter durch die elastischen Spannmittel so lange in Anlage an dem Anschlag des Spindelstocks gehalten, bis eine weitere Antriebsvorrichtung auch bei ortsfestem Spindelstock ein Verfahren der Halter bewirkt.

Diese Maßnahme hat den Vorteil, daß zum Lösen des Werkzeugs und für die hierzu erforderliche Relativbewegung zwischen Träger und Spindelstock kein Verfahren des Spindelstocks selbst mehr erforderlich ist, sondern daß vielmehr durch die weitere Antriebsvorrichtung der Träger relativ zum Spindelstock in beliebiger Lage der Spindelstocks verfahren werden kann. Dies erhöht einmal die Flexibilität der Werkzeugmaschine zum anderen können die Wechselzeiten für die Werkzeuge reduziert werden, da ein Werkzeugwechsel auch unmittelbar oberhalb des Werkstücks möglich ist und es nicht mehr erforderlich ist, den Spindelstock in seine obere Endlage zu verfahren.

Ist die weitere Antriebsvorrichtung in Ausgestaltung der Erfindung mit einem am Spindelstock fest angeordneten Druckmittelzylinder ausgestattet, dessen Kolbenstange am Träger mittelbar oder unmittelbar angreift, kann der Träger durch einfache Steuerung in die Werkzeugwechselposition gefahren werden. Ist die Rückstellkraft eines elastischen Spannmittels, beispielsweise einer Schraubenfeder, vorhanden, so kann die weitere Antriebsvorrichtung einfach ausgebildet werden, weil sie nur das Verfahren des Trägers in eine Richtung gegen die Kraft des elastischen Spannmittels bewirken muß. Das Zurückfahren des Trägers hingegen erfolgt alleine unter dem Einfluß des Spannmittels, die weitere Antriebsvorrichtung ist hierführ nicht erforderlich. Der Kolben des Druckmittelzylinders muß daher mit dem Druckmedium nur von einer Seite beaufschlagt werden.

Ferner ist eine Ausführungsform bevorzugt, bei der die Halter durch Lenker mit dem Träger verbunden sind, an dem Träger ferner nach oben weisende Abschnitte angeordnet sind und die Kolbenstange an einem dieser Abschnitte angreift.

Diese Ausführungsform hat den Vorteil, daß die weitere Antriebsvorrichtung im oberen Bereich des Spindelstocks angeordnet werden kann, so daß der Raum im Bereich der Spindel, der praktisch vollkommen für das Ausführen des Werkzeugwechsels benötigt wird, durch die weitere Antriebsvorrichtung nicht beeinträchtigt wird.

Bei einer Ausführungsform der Erfindung ist ein Lenkerparallelogram vorgesehen, bei dem zwei parallele Lenker in einer Spannposition parallel zur Spindelachse und unterschiedlich radial zu dieser beabstandet angeordnet sind, wobei ihre Enden am Träger um waagerechte Achsen schwenkbar befestigt sind, und ihre anderen Enden am Halter schwenkbar befestigt sind.

Durch derartige Lenker läßt sich besonders einfach und sicher der von den einzelnen Haltern zu beschreibende Weg festlegen. Dabei ist für die Werkzeuge eine Führung vorgesehen, bei der die Werkzeuglängsache während der Bewegung in die und aus der Spannposition zu sich selbst parallel bleibt. Ferner ist von Vorteil, daß durch ein derartiges Lenkerparallelogramm mit einer einfachen Bewegung einer Betätigungseinheit, insbesondere einer Kolben-Zylinder-Einheit, das Werkzeug aus einer Position in der Spindelachse seitlich entfernt in eine Magazinposition verfahren werden kann, in der das Werkzeug über die Außenkontur des Spindelstocks vorsteht, so daß beim relativen Zurückziehen des Trägers gegen den Anschlag die Werkzeuge sich außerhalb des Umrisses des Spindelstocks befinden. Dies wird insbesondere dadurch erreicht, daß die in der Spannstellung parallel zur Spindelachse verlaufenden parallelen Lenker verhältnismäßig Lang ausgebildet sind, so daß bei einem Verschwenken des Lenkerparallelogramms um 90° ein radialer Abstand von der Spindelachse hergestellt wird, der der Länge dieser parallelen Lenker entspricht.

Zum Bewegen der Halter können vorzugsweise Kolben-Zylinder-Einheiten vorgesehen sein, die vorzugsweise pneumatisch arbeiten, da sie keine hohen Kräfte aufbringen müssen. Diese Kolben-Zylinder-Einheiten können vorzugsweise mit ihrem einen Ende am Träger und mit dem anderen Ende an einem Teil der Lenkerführung angreifen.

Weitere Einzelheiten und Vorteile der Erfindung ergeben sich aus der nachfolgenden Beschreibung eines Ausführungsbeispiels der Erfindung anhand der Zeichnung.

Es zeigen :

Fig. 1 ein stark vereinfachte Seitenansicht der gesamten Maschine eines ersten Ausführungsbeispiels,

Fig. 2 eine im Längsschnitt dargestellte, gegenüber Fig. 1 stark vergrößerte Seitenansicht des Spindelstockes ohne Werkzeugmagazin, teilweise abgebrochen dargestellt,

Fig. 3 eine Seitenansicht des Magazins, teilweise im Längsschnitt, in gegenüber Fig. 2 verkleinertem Maßstab des Magazins,

Fig. 4 eine Draufsicht auf das Magazin nach Fig. 3, teilweise in unterschiedlichen waagrechten Ebenen im Querschnitt dargestellt,

Fig. 5 schematisch den Funktionsablauf beim Werkzeugwechsel,

Fig. 6 schematisch den Funktionablauf beim Werkzeugwechsel bei einer Maschine eines zweiten Ausführungsbeispiels,

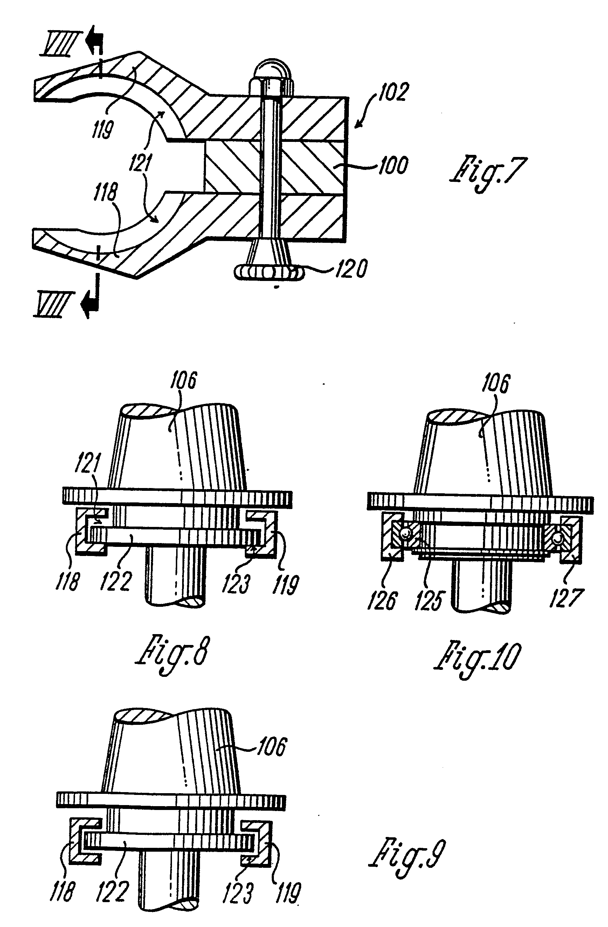

Fig. 7 einen Schnitt entsprechend der Linie VII-VII in Fig. 3,

Fig. 8 einen Längsschnitt durch einen Halter, der ein nicht in die Spindel eingespanntes Werkzeug hält, entsprechend der Linie VIII-VIII in Fig. 7,

Fig. 9 einen der Fig. 8 ähnlichen Längsschnitt jedoch bei in die Spindel eingespannten Werkzeug,

Fig. 10 einen der Fig. 8 entsprechenden Längsschnitt durch einen Halter gemäß einer anderen Ausführungsform,

Fig. 11 eine vereinfachte perspektivische Ansicht der Maschine mit Schutzgehäuse bei geöffneter Zugriffstür,

Fig. 12 eine Seitenansicht mit geschlossener Zugriffstür.

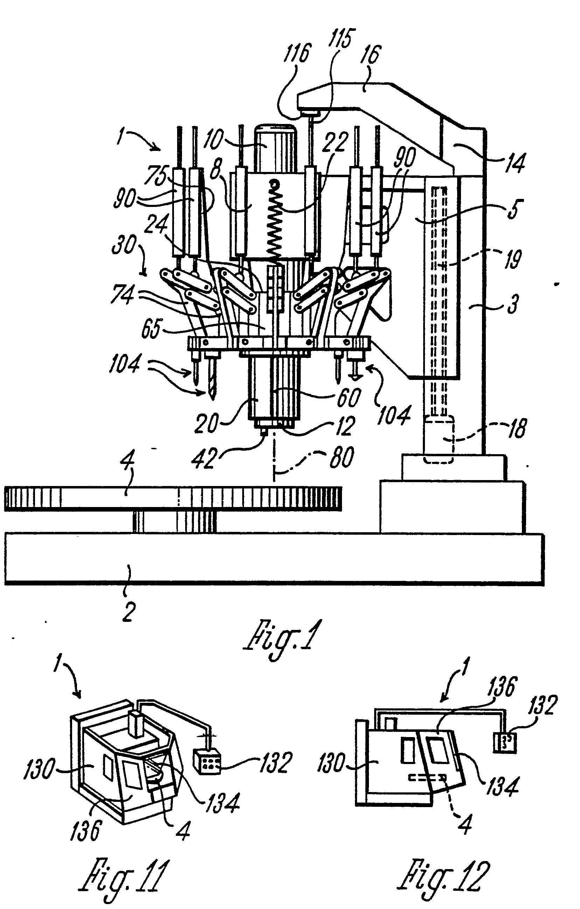

Fig. 1 zeigt schematisch eine Werkzeugmaschine 1 mit einem Fuß 2, auf dem eine Säule 3 in nicht näher dargestellter Weise in zwei rechtwinklig zueinander verlaufenden Koordinatenrichtungen in waagrechter Ebene verschiebbar geführt ist. Die Erfindung ist jedoch auch bei solchen Maschinen anwendbar, bei denen statt dieser geschilderten Verschiebbarkeit der Säule ein Kreuztisch, auf dem das zu bearbeitende Werkstück aufgespannt wird, in waagrechter Ebene in zwei Koordinaten verschiebbar ist.

Am Fuß 2 ist ein Rundschalttisch oder Drehtisch 4 um eine vertikale Achse schwenkbar und in zwei um 180° verschiedenen Drehstellungen arretierbar angeordnet, der es gestattet, zwei Werkstücke aufzuspannen, so daß während der Bearbeitung eines Werkstückes das bereits fertig bearbeitete andere Werkstück abgenommen und ein zu bearbeitendes neues Werkstück aufgespannt werden kann.

An der Säule 3 ist in vertikaler Richtung verschiebbar ein Träger 5 gelagert, der an seinem freien Ende einen Spindelstock 8 trägt. Der Spindelstock 8 weist an seinem oberen Ende einen Motor 10 auf, der die im Inneren des Spindelstockes 8 um eine vertikale Achse drehbare Spindel 12 antreibt. Die Spindel 12 ist im Spindelstock 8 unverschiebbar gelagert. Am oberen Ende der Säule 3 ist ein Ausleger 14 angeordnet, der im Bereich seines freien Endes zwei Arme 16 aufweist, deren Enden in der Draufsicht seitlich zu beiden Seiten des Spindelstocks liegen und dort später noch erläuterte Anschläge bilden.

Der Spindelstock 8 weists in seinem unteren Bereich einen drehstarren Rohrabschnitt 20 auf, auf dem das in Fig. 1 nur angedeutet gezeichnete Magazin 30 parallel zur Spindelachse verschiebbar geführt ist und durch Schraubenzugfedern 22 während aller Arbeitsvorgänge der Maschine in Anlage an einer Schulter 24 des Spindelstocks 8, die den Rohrabschnitt 20 seitlich überragt, gehalten ist.

Der Träger 5 und mit ihm der Spindelstock 8 ist durch einen in der Säule 3 angeordneten Antriebsmotor 18 über eine von diesem angetriebene Gewindespindel 19 verschiebbar. Durch diesen Motor 18 werden die vertikalen Bewegungen der Spindel 12 und des jeweils in diese eingespannten Werkzeuges ausgeführt.

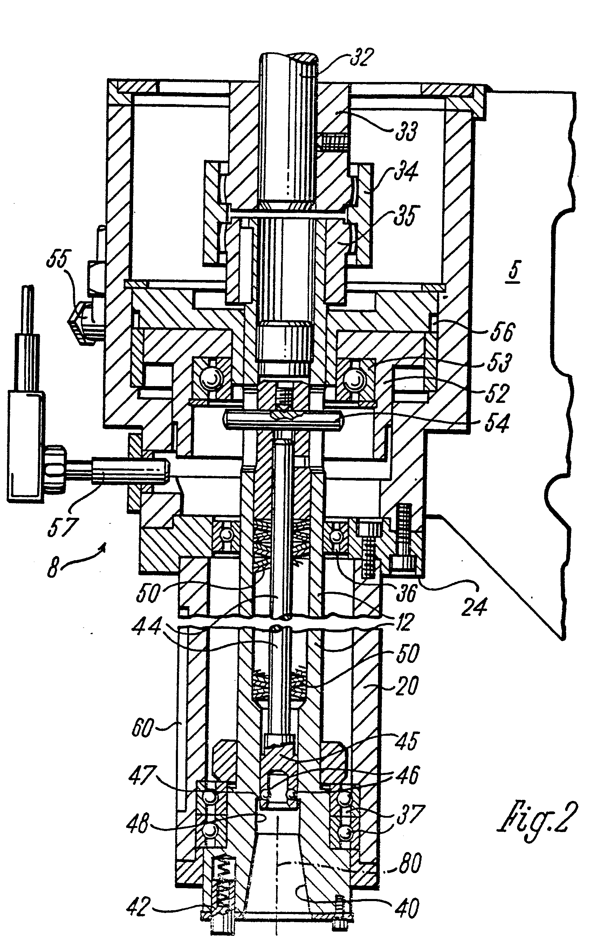

In Fig. 2 ist zur Zeichnungsvereinfachung der Motor 10 weggelassen. Dieser Motor 10 treibt eine Welle 32 an, die über eine Kupplung 33, 34, 35 die Spindel 12 rotierend antreibt, die in ihrem oberen und unteren Endbereich durch Kugellager 36 und 37 gelagert ist. Die Spindel 12 ist im wesentlichen rohrförmig ausgebildet, sie weist in ihrem unteren Endbereich eine sich nach außen, also unten, erweiternde kegelstumpfförmige Werkzeugaufnahme 40 auf. An der unteren Stirnseite der Spindel 12 ist noch ein federnd gelagerter Bolzen 42 vorgesehen, der während des Einspannens eines Werkzeuges bei noch leich rotierender Spindel in eine am Werkzeug vorgesehene Aussparung eingreift und dadurch eine drehfeste Verbindung zwischen der Spindel und dem Werkzeug herstellt. Im Inneren der Spindel 12 ist eine Spannstange 44 angeordnet, die an ihrem unteren Ende eine Klemmvorrichtung 45 aufweist, in der Kugeln 46 unverlierbar gehalten sind. Wenn die Spannstange 44 gegenüber der in Fig. 2 gezeigten Stellung etwas nach unten bewegt wird, so passieren die Kugeln 46 eine Schulter 47 in einem sich an die Werkzeugaufnahme 40 anschließenden zylinderischen Bohrungsteil 48, wodurch die Kugeln dann in der Lage sind, eine Bewegung radial nach außen auszuführen, so daß ein ein der Klemmvorrichtung 45 durch die Kugeln gehaltenes Werkzeug freigegeben wird und ein anderes Werkzeug eingesetzt werden kann. Die Spannstange 44 wird durch ein Paket von Tellerfedern 50 zur allen Zeiten mit Ausnahme des Werkzeugswechsels nach oben gedrückt, wodurch ohne Fremdenergie das Werkzeug sicher gespannt ist. Die Spannstange 44 wird pneumatisch nach unten bewegt. Hierzu ist ein Luftkolben 52 vorgesehen, der über ein Kugellager 53 auf einen in der Spindel 12 angeordneten Querbolzen 54 drückt, wenn über einen Druckluftanschluß 55, der mit einem ringförmigen Kanal 56 in Verbindung steht, der Oberseite des Luftkolbens 52 Druckluft zugeführt wird. Ein Magnetschalter 57 ist dazu vorgesehen, zu erkennen, wenn der Luftkolben 52 seine unterste Stellung erreicht hat, damit in Abhängigkeit von dem vom Magnetschalter 57 abgegebenen Signal das von der Klemmvorrichtung 45 freigegebene Werkzeug entnommen und ein neues Werkzeug zugeführt werden kann.

Der in Fig. 2 gezeigte Spindelstock entspricht weitestgehend dem Stand der Technik, es wurden daher nur die zum Verständnis unbedingt erforderlichen Teile erläutert und in der Zeichnung zum Verständnis nicht unbedingt erforderliche Teile fortgelassen.

Der Rohrabschnitt 20 ist an seiner Außenseite kreiszylindrisch. An einer Stelle ist eine parallel zur Längsrichtung des Rohrabschnittes 20 verlaufende Nut 60 vorgesehen, die zur Drehsicherung des auf der Außenseite des Rohrabschnittes 20 verschiebbar geführten Magazins 30 dient.

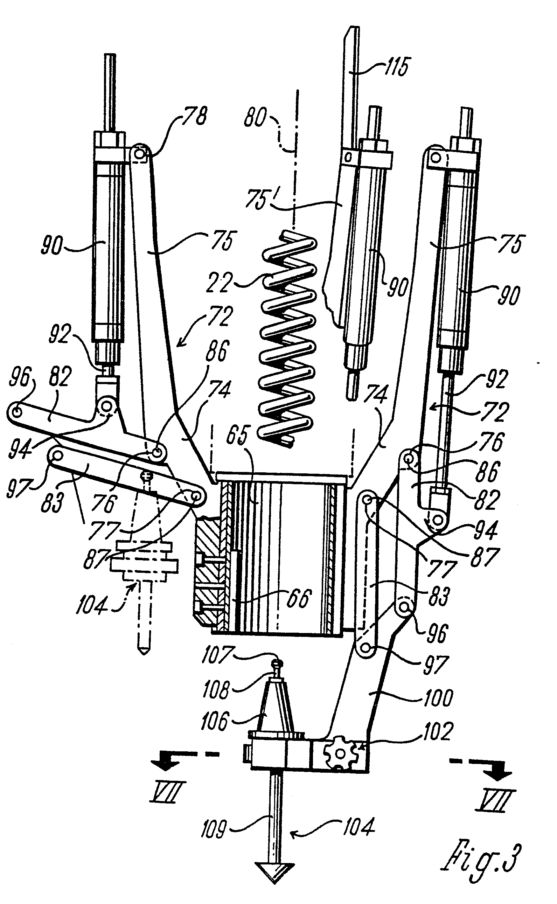

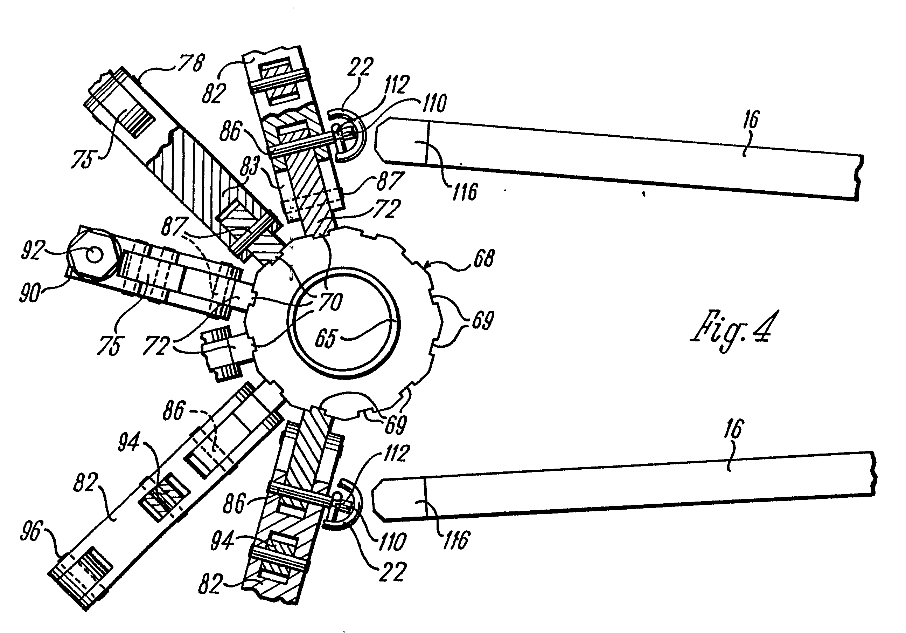

Das in Fig. 3 und 4 in einzelnen gezeigte Magazin 30 weist einen Rohrabschnitt 65 mit zylindrischer Innenfläche auf, dessen innendurchmesser dem Außendurchmesser des Roharbschnittes 20 bis auf ein eine Verschiebebewegung ermöglichendes Spiel gleich ist. An der Innenseite des Rohrabschnittes 65 ist eine Leiste 66 angeschraubt, die in die Nut 60 eingreift und dadurch ein Verdrehen des Rohrabschnittes 65 relativ zum Rohrabschnitt 20 verhindert. Die Außenseite des Rohrabschnittes 65 ist polygonartig gestaltet, um ebene Anlageflächen zum Befestigen der einzelnen Werkzeughaltevorrichtungen zu schaffen. Zur genauen Fixierung der einzelnen Haltevorrichtungen sind außerdem in der polygonartigen Außenfläche 68 des Rohrabschnittes 65 Längsnuten 69 vorgesehen, in die jeweils ein leistenförmiger Vorsprung 70 eines Halteteils 72, das Teil der Haltevorrichtung für ein Werkzeug ist, eingreift. Insgesamt sind an dem Rohrabschnitt 65 zwölf Halteteile vorgesehen, das dargestellte Magazin 30 faßt also höchstens zwölf Werkzeuge.

Das Halteteil 72 weist einen dicht unterhalb des oberen Randes des Rohrabschnittes 65 beginnenden, radial nach oben und etwas nach außen gerichteten Abschnitt 74 auf, der unter einem Winkel von etwa 30° gegenüber der Vertikalen verläuft, an dessen oberem Ende sich ein ebenfalls radial nach oben und außen, jedoch steiler verlaufender Abschnitt 75 anschließt, der gegenüber der Vertikalen einen Winkel von etwa 4° einschließt. An dem Abschnitt 74 sind im Abstand zwei Lagerbohrungen 76 und 77 vorgesehen, die quer zur Längsmittelebene des Halteteils 72 verlaufen, wobei diese Längsmittelebene radial zur Spindelachse 80 verläuft. Im oberen Endbereich des Abschnittes 75 ist eine weitere Lagerbohrung 78 vorgesehen. In den Lagerbohrungen 76 und 77 sind zwei parallel zueinander verlaufende Lenker 82 und 83 gleicher Länge mit ihren der Spindelachse 80 zugewandten Enden mittels Achsbolzen 86 und 87 schwenkbar gelagert, sie haben somit eine waagrechte Schwenkachse. Mittels der Lagerbohrung 78 ist das obere Ende eines Zylinders einer pneumatischen Kolben-Zylinder-Einheit 90 um eine parallel zur Lagerbohrung 76 und 77 verlaufende Schwenkachse schwenkbar befestigt, und das untere Ende der Kolbenstange 92 der Kolben-Zylinder-Einheit 90 ist mit einem am Lenker 82 angeordneten nach oben ragenden Fortsatz 94 schwenkbar verbunden. Die im Bereich der der Spindelachse 80 abgewandten Enden der Lenker 82 und 83 angeordneten Lagerbohrungen 96 und 97 sind mit einem nach unten und bezüglich der Spindelachse 80 radial nach innen verlaufenden Arm 100 verbunden, wobei die Verbindungslinie der Lagerbohrungen 96 und 97 parallel zur Verbindungslinie der Lagerbohrungen 86 und 87 verläuft und der Abstand der Lagerbohrungen 96 und 97 dem der Lagerbohrungen 86 und 87 gleich ist. Es wird hierdurch somit eine Parallelführung gebildet. Der Arm 100 trägt an seinem unteren Ende eine Halterung 102 für ein Werkzeug. Dieses in Fig. 3 dargestellte Werkzeug 104 weist einem in die Werkzeugaufnahme 40 passenden Kegelstumpf 106 auf, an dessen oberem Ende ein Spannbolzen 107 angeordnet ist, der im Abstand zu seinem oberen Ende eine Verjüngung 108 aufweist, in die die Kugeln 46 der Klemmvorrichtung 45 beim Spannvorgang eingreifen. Bei dem sich in der Fig. 3 in der Spindelachse 80 befindlichen Werkzeug möge es sich, wie in der Zeichnung angedeutet, um ein Senkwerkzeug 109 handeln.

Bei zehn der zwölf Haltevorrichtungen sind die Achsbolzen 86 genauso lang wie die Achsbolzen 87, sie ragen also nur wenig über die senkrechten Seitanflächen der Lenker 82 und 83 hinaus, die mit ihren Enden gabelartig die Halteteile 72 umfassen. Zwei der Achsbolzen 86 sind jedoch auf einer Seite mit einer Verlängerung 110 versehen, und diese Verlängerungen 110 liegen einander etwa diametral gegenüber. Diese Verlängerungen 110 weisen eine umlaufende Ringnut 112 auf, die zum Eingriff des unteren Endes der oben bereits erwähnten Schraubenzugfedern 22 bestimmt sind. Das obere Ende dieser Schraubenzugfedern 22 ist am Spindelstock 8 befestigt, und zwar nahe dessen oberem Ende, wie dies aus Fig. 1 ersichtlich ist. Wenn das in Fig. 3 und 4 gezeigte Magazin an dem Spindelkopf 8 befestigt wird, so wird der Rohrabschnitt 65 zunächst über den Rohrabschnitt 20 von unten her geschoben, anschließend werden dann die ggf. bereits mit ihrem oberen Ende am Spindelstock befestigten Schraubenzugfedern mit ihrem untere Ende in die Ringnuten 112 eingenängt. Durch die Schraubenzugfedern 22 wird der Rohrabschnitt 65 während der Arbeit der Maschine stets in Anlage an der Schulter 24 (Fig. 2) gehalten.

Von den das obere Ende der Kolben-Zylinder-Einheiten 90 haltenden Abschnitten sind zwei mit dem Bezugszeichen 75' bezeichnet, da sie abweichend von den Abschnitten 75 nach oben ragende Verlängerungen 115 tragen. Das obere Ende der Verlängerungen 115 liegt genau unterhalb der freien Enden 116 der Arme 16. Sobald bei der Aufwärtsbewegung des Spindelstocks, wobei das Magazin 30 dieser Aufwärtsbewegung folgt, der Spindelkopf so hoch angehoben worden ist, daß die oberen Enden der Verlängerungen 115 an den freien Enden 116 der Arme 16 von unten anschlagen, kann das Magazin 30 bei der weiteren Aufwärtsbewegung des Spindelstockes 8 dieser Bewegung nicht mehr folgen, es bleibt vielmehr in der durch die soeben gennanten Anschläge bestimmten Höhe stehen, wobei bei der weiteren Aufwärtsbewegung des Spindelstockes 8 die Schraubenzugfedern 22 zunehmend gespannt werden. Diese Aufwärtsbewegung des Spindelstockes 8 bei stillstehendem Magazin 30 ist erforderlich, um das untere Ende der Spindel 12 aus dem Bereich des Kegels 106 des Werkzeugs herauszubewegen, damit der Werkzeugwechsel ausgeführt werden kann.

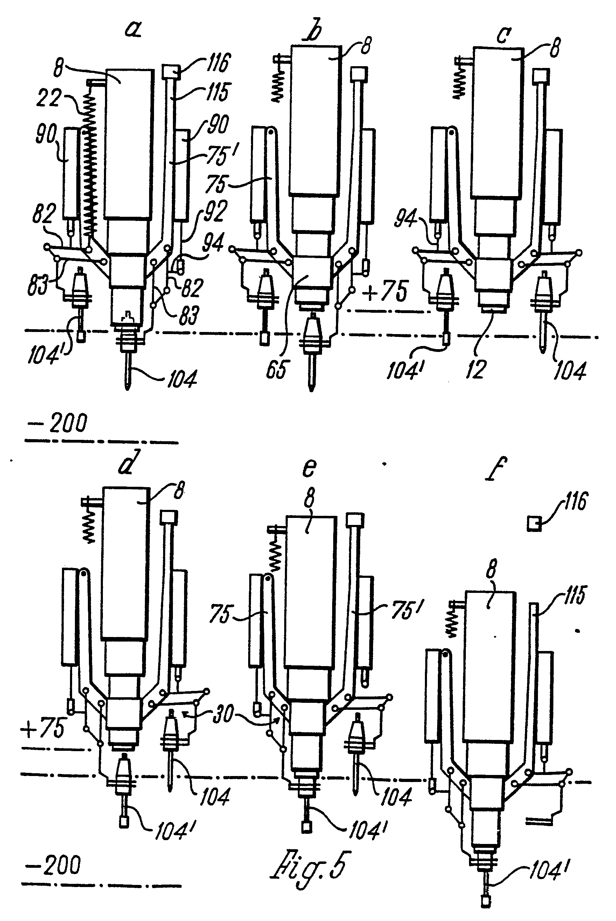

In Fig. 5 a bis f ist schematisch der Ablauf eines Werkzeugwechsels dargestellt. Die vertikale Bewegung des Spindelstockes 8 wird hier als Bewegung in der Z-Achse oder Z-Koordinate bezeichnet, und die Höhe $Z = 0$ ist diejenige Höhe des unteren Endes der Spindel 12, bei der die Klemmvorrichtung 45 im Inneren zum Lösen oder Festklemmen des Werkzeugs betätigt wird. Von der Höhe $Z = 0$ aus nach unten bis $Z = -200$ (mm) liegt der Bereich in Milimetern, innerhalb von dem Arbeiten durch die Spindel ausgeführt werden können. Fig 5a zeigt eine Stellung, bei der die Spindel sich in der Stellung $Z = 0$ befindet und ein von dem rechten Halteteil 72 gehaltenes Werkzeug 104 sich gerade in mit der Spindel fluchtender Lage befindet. In dieser Position ist das obere Ende der Verlängerung 115 an dem freien Ende 116 des Arms 16 zur Anlage gekommen. In dieser Position wird durch Zufuhr von Druckluft zu dem Luftkolben 52 das Werkzeug 104 entspannt, bleibt aber im wesentlichen an der in Fig. 5a gezeigten Stelle. Anschließend wird der Spindelstock 8 weiter nach oben gefahren, wobei das Magazin 30 seine Höhenlage beibehält, bis der Spindelstock 8 die in Fig. 5b gezeigte Stellung erreicht hat. Hier nun ist das Werkzeug 104 vollständig von der Spindel freigekommen. Anschließend wird das zuletzt zur Arbeit benutzte Werkzeug 104 durch betätigen der in Fig. 5 rechten Kolben-Zylinder-Einheit 90 in seine Magazinstellung geschwenkt, was in Fig. 5c dargestellt ist. Nun wird durch betätigen der linken Kolben-Zylinder-Einheit, an deren Stelle selbstverständlich jede andere Kolben-Zylinder-Einheit betätigt werden könnte, das in Fig. 5 linke Werkzeug, das mit dem Bezugszeichen 104' bezeichnet ist, aus seiner Magazinstellung in die mit der Spindel fluchtende Stellung bewegt, und diese zuletzt genannte Stellung ist in Fig. 5d gezeigt. Anschließend fährt der Spindelstock 8 wieder nach unten bis zur Höhenlage $Z = 0$ und es wird durch Freigabe des Luftkolbens 52 durch die Tellerfedern 50 die Klemmvorrichtung betätigt, die das Werkzeug 104' spannt. Dieser Zustand ist in Fig. 5e gezeigt. Fig. 5f schließlich zeigt den gesamten Spindelkopf samt Magazin in einer gegenüber $Z = 0$ etwas abgesenkten Stellung, und das Magazin 30 ist dem Spindelkopf in diese Stellung gefolgt, in der die Maschine irgendwelche Bearbeitungvorgänge ausführen kann.

In Fig. 5 wie auch in Fig. 2 ist deutlich dargestellt, daß bei dem jeweils in Arbeitsstellung befindlichen Werkzeug die Lenker 82 und 83 eine parallel zur Spindelachse verlaufende Stellung einnehmen. In der Magazinstellung dagegen sind die Lenker gegenüber der Arbeitsstelung um etwas mehr als 90° nach oben geschwenkt.

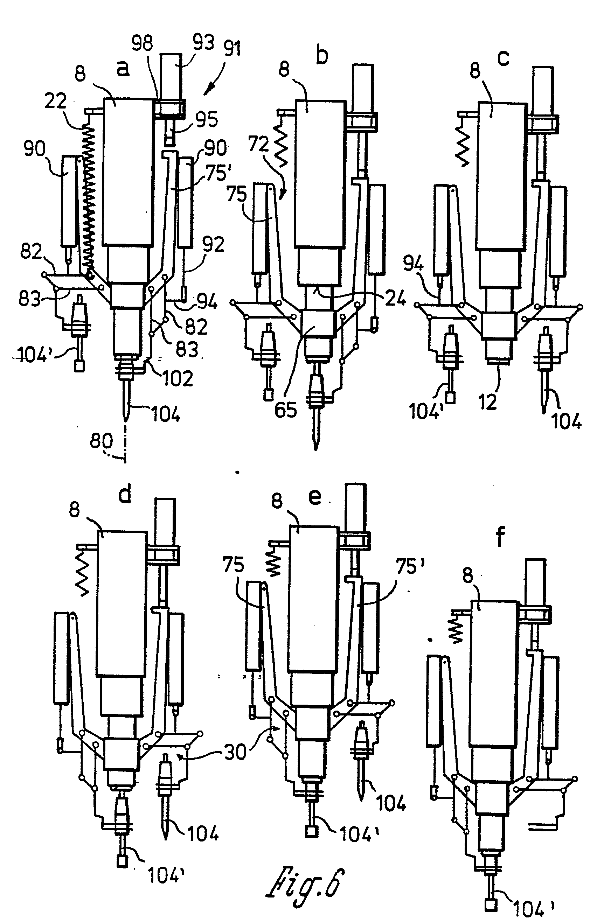

Die Werkzeugmaschine nach Fig. 6 weist einen Spindelstock 8 auf, der an seinem unteren Ende in eine Spindel 12 übergeht, die ein Werkzeug 104 trägt. Die Spindelachse ist mit 80 bezeichnet. Das Werkzeug 104 wird von einem nur schematisch dargestellten Halter 102 gehalten, der seinerseits von einer Parallelogrammführung, bestehend aus Lenkern 82 und 83 gehalten wird. Am Lenker 82 greift ein Fortsatz 94 einer Kolbenstange 92 an, die zu einer ersten Antriebsvorrichtung 90 gehört. Diese Antriebsvorrichtung 90 ist, ebenso wie die Lenker 82, 83 an einem Abschnitt 75 bzw. 75' angeordnet. Sämtliche, zu den verschiedenen Werkzeugen 104, 104' gehörenden Abschnitte 75, 75' sind an einem gemeinsamen Träger befestigt, der im dargestellen Ausführungsbeispiel als Rohrabschnitt 65 ausgebildet ist. Der Rohrabschnitt 65 umfaßt die Spindel 12 und ist auf dieser verschieblich angeordnet. Der Rohrabschnitt 65 wird in der Arbeitsstellung von einer Schraubenzugfeder 22 gegen einen Anschlag 24 des Spindelstockes 8 angedrückt.

Das Aus- und Einfahren der Werkzeuge 104, 104' mit der ersten Antriebsvorrichtung 90 über die Elemente 92, 94, 82, 83, 102 erfolgt wie oben beschrieben.

Am oberen Ende des Spindelstocks 8 ist vermittels einer Halterung 98 ein Druckmittelzylinder 93 angeordnet, der mit einer Kolbenstange 95 insgesamt eine weitere Antriebsvorrichtung 91 bildet. Das freie Ende der Kolbenstange 95 liegt am oberen Ende des Abschnittes 75' an.

In der Phase a) der Fig. 6 ist das Werkzeug 104 in der Spindel 12 entspannt und die Kolbenstange 95 liegt lose am Abschnitt 75' an. Die weitere Antriebsvorrichtung 91 wird nun in Phase b) aktiviert und die Kolbenstange 95 drückt demzufolge auf den Abschnitt 75' und schiebt den Rohrabschnitt 65 nach unten, so daß der Halter 102 mit dem Werkzeug 104 nach unten verfahren wird und das Werkzeug 104 die Spindel 12 verläßt.

In der Phase c) wird nun die Antriebsvorrichtung 90 betätigt, dadurch schwenken die Lenker 82, 83 in der Fig. 6 nach rechts und das Werkzeug 104 wird aus dem Bereich der Spindelachse 80 entfernt.

In der Phase d) vollführt die in Fig. 6 links dargestellte Antriebsvorrichtung 90 für ein weiteres Werkzeug 104 die zu Phase c) gegenläufige Bewegung, so daß das Werkzeug 104' in die Spindelachse 80 gelangt.

In Phase e) wird nun die weitere Antriebsvorrichtung 91 abgeschaltet, so daß die Schraubenfeder 22 den Rohrabschnitt 65 wieder nach oben zieht, bis dieser am Anschlag 24 zur Anlage kommt. Gleichzeitig wird das Werkzeug 104' hierdurch in die Spindel eingeführt und anschließend gespannt. Mitnehmer an der Spindel, die in Mitnehmernuten des Werkzeugschaftes eingreifen, erlauben die Übertragung des erforderlichen Drehmoments. Die Werkzeugmaschine ist nun wieder arbeitsbereit.

Phase f) zeigt die Arbeitsstellung der Werkzeugmaschine, in der der Spindelstock 8 mit fest eingespanntem Werkzeug 104' in seine untere Arbeitsstellung gefahren wird, in der ein in der Zeichnung nicht dargestelltes Werkstück bearbeitet wird.

Wie man aus Fig. 6 leicht erkennt, braucht zum Wechsel der Werkzeuge 104, 104' der Spindelstock 8 nur so weit von der Oberfläche des Werkstückes nach oben weggefahren zu werden, wie der Arbeitsweg der Kolbenstange 95 ist. Es ist demnach nicht erforderlich, den Spindelstock 8 in seine obere Endlage zu fahren.

Die Halterung 102 weist zwei halbschalenförmige Halteteile 118 und 119 auf, die an dem Arm 100 befestigt sind. Nach Lösen einer Klemmschraube 120 kann das Halteteil 118 abgenommen werden, wodurch das Herausnehmen eines Werkzeuges aus der Halterung 102 und das Einsetzen möglich ist. Die Halteteile 118, 119 haben einen C-förmigen Querschnitt, und eine Nut 121 an der Innenseite der Halteteile 118, 119 nimmt einen Flansch 122, der unterhalb des Kegelstumpfs 106 angeordnet ist, auf. Der Flansch 122 hat innerhalb der Nut 121 ein geringes seitliches Spiel. Solange ein Werkzeug nicht in die Spindel der Werkzeugmaschine eingespannt ist, sitzt der Flansch 122 auf der unteren Begrenzungsfläche 123 der Nut 122 auf. Die Nut 121 ist so hoch, daß dann, wenn das Werkzeug nach dem Einführen in die Spindel dort gespannt wird und sich dabei um einige Millimeter hebt, der Flansch 122 noch nicht den oberen Rand der Nut 121 berührt, wie Fig. 9 zeigt. Das in die Spindel eingespannte Werkzeug ist somit mit seiner Halterung nicht in Berührung, jedoch unverlierbar mit der Halterung verbunden, weil die Nut 121 den Flansch 122 auch auf dessen Oberseite übergreift. Die Halterung weist keinerlei Teile auf, die bewegt werden müssen, um das Werkzeug loszulassen, wenn es in die Spindel eingespannt wird. Daher entspricht die soeben geschilderte Konstruktion dem Begriff « der Halter bleibt während der Arbeit des Werkzeugs in Eingriff mit dem Werkzeug ».

Bei der in Fig. 10 gezeigten anderen Ausführungsform weist das Werkzeug keinen relativ zum Kegelstumpf 106 unbeweglichen Flansch 122 auf, sondern ein flanschartiger Vorsprung wird dort durch ein Kugellager 125 gebildet. Die Höhe der in den hier mit den Bezugszeichen 126 und 127 bezeichneten Halteteilen vorgesehenen Nut und deren Durchmesser ist so bemessen, daß das Kugellager 125 ohne Spiel aufgenommen wird. Beim Spannvorgang nach dem Einführen des Werkzeugs in die Spindel gibt die ganze Halterung elastisch etwas nach, so daß das Werkzeug richtig gespannt werden kann.

Wie Fig. 11 und 12 zeigen, ist die gesamte Maschine aus Arbeitsschutzgründen von einem Gehäuse 130 umgeben, das Fenster aus bruchsicherem Material aufweist, damit der Arbeiter die Arbeitsvorgänge beobachten kann. Ein Bedienfeld 132 ermöglicht einen direkten Eingriff in die Arbeitsvorgänge an der Maschine, daneben ist eine digitale Steuerung vorgesehen, die Arbeitsabläufe gestattet, ohne daß ein Arbeiter eingreifen muß. Zum Wechseln der Werkstücke weist das Gehäuse 130 an seiner Vorderseite eine Tür 134 auf, die um eine im Bereich ihrer Oberkante angeordnete waagrechte Schwenkachse schwenkbar gelagert ist. In der in Fig. 11 gezeigten offenen Stellung der Tür 134 ist diese nach innen geklappt, so daß der Arbeiter ein auf dem Drehtisch 4 befindliches Werkstück, das bereits bearbeitet worden ist, ausspannen und entnehmen kann sowie ein noch nicht bearbeitetes Werkstück auf den Drehtisch 4 aufspannen kann. Die Anordnung ist so getroffen, daß die unterkante der Tür 134 zusammen mit einem in der Mitte des Drehtisches 4 angeordneten nach oben ragenden wandartigen Vorsprung völlig verhindert, daß bei der Bearbeitung des vom Arbeiter aus gesehen hinter der Tür liegenden Werkstücks durch die Maschine Kühlflüssigkeit oder Späne nach außen geschleudert werden können. Hat der Arbeiter das Werkstück gewechselt, so schwenkt er die Tür 134 nach vorne, bis ihre beiden Längskanten mit den vorderen Seitenteilen 136 und 138 des Gehäuses fluchten. Auch in dieser Stellung können Späne oder Kühlflüssigkeit nicht nach außen gelangen. Es ist eine Verriegelung vorgesehen, die einerseits das Verschwenken der Tür 134 nur zuläßt, wenn der Drehtisch 4 still steht, und die andererseits eine Drehbewegung des Drehtisches 4 verhindert, so lange die Tür 134 nach innen geschwenkt ist.

Die gesamte Maschine nach Fig. 1 hat ein Gewicht von ungefähr 2 500 kg. Der Außendurchmesser des Rohrabschnittes 20 beträgt 100 mm. Die Länge des Rohrabschnittes 20 beträgt etwa 220 mm. Der Außendurchmesser des Rohrabschnittes 65 in der Darstellung der Fig. 3 beträgt etwa 125 mm, seine Länge beträgt etwa 140 mm. Weitere Abmessungen können den Figuren 3 und 4 entnommen werden.

**Patentansprüche**

1. Werkzeugmaschine zum aufeinanderfolgenden Bearbeiten von Werkstücken mit verschiedenen Werkzeugen (104, 104'), die in eine Spindel (12) eines Spindelstocks (8) der Werkzeugmaschine (1) einspannbar sind, wobei der Spindelstock (8) an einem in zwei senkrecht zur Spindelachse (80) gerichteten Koordinatenrichtungen relativ zum Werkstück verfahrbaren Tragelement (5) gehalten und mit diesem in einer Richtung parallel zur Spindelachse (80) verfahrbar ist, mit einem Magazin (30), in dem die Werkzeuge (104, 104') in Haltern (100, 102) gehalten sind, die um die Spindelachse (80) herum verteilt angeordnet sind, wobei jeder Halter (100, 102) mittels einer eigenen Antriebsvorrichtung in eine mit der Spindelachse (80) fluchtende Lage und in eine Lage außerhalb der Spindelachse (80) bewegbar ist, wobei ferner die Halter (100, 102) und die Spindel (12) in Richtung der Spindelachse (80) relativ zueinander verschiebbar sind, dadurch gekennzeichnet, daß das Magazin (30) längs der Spindelachse (80) verfahrbar und in der Einführrichtung des Werkzeugs (104, 104') in die Spindel (12) unter der Kraft eines elastischen Spannmittels an einem axialen Anschlag des Spindelstocks (8) gehalten ist, so daß der Halter (100, 102) des jeweils ein- bzw. auszuwechselnden Werkzeugs (104, 104') den Bewegungen des Spindelstocks (8) zwischen einer Werkzeugwechselposition und einer Bearbeitungsposition am Werkstück folgt und während der Arbeit des Werkzeuges in einer mit der Spindelachse (80) fluchtenden Lage und im Eingriff mit dem Werkzeug (104, 104') bleibt, und daß Mittel vorgesehen sind, um das Magazin (30) zwecks Werkzeugwechsel gegen die Kraft des elastischen Spannmittels vom axialen Anschlag abzuheben.

2. Werkzeugmaschine nach Anspruch 1, dadurch gekennzeichnet, daß die Halter (100, 102) an einem gemeinsamen Träger gehalten sind.

3. Werkzeugmaschine nach Anspruch 2, dadurch gekennzeichnet, daß der Träger einen Rohrabschnitt (65) aufweist, der auf einem zugeordneten Rohrabschnitt (20) des Spindelstocks (8) verschiebbar geführt ist.

4. Werkzeugmaschine nach Anspruch 3, dadurch gekennzeichnet, daß der Anschlag als Schulter (24) des Spindelstocks (8) ausgebildet ist.

5. Werkzeugmaschine nach einem der Ansprüche 1 bis 4, dadurch gekennzeichnet, daß die elastischen Spannmittel mindestens eine Schraubenzugfeder (22) aufweisen.

6. Werkzeugmaschine nach einem der Ansprüche 1 bis 5, dadurch gekennzeichnet, daß die Halter (100, 102) durch die elastischen Spannmittel so lange in Anlage an dem Anschlag des Spindelstocks (8) gehalten werden, bis sich der Spindelstock (8) in einer aus der Werkzeugwechselposition in Richtung der Spindelachse (80) in Richtung auf das Werkzeug herausbewegten Position befindet, und daß beim Erreichen der Werkzeugwechselposition der Halter (100, 102) des zu wechselnden Werkzeugs (104) an einem in Richtung der Spindelachse (80) wirkenden Anschlag (116) zur Anlage kommt, derart, daß der Halter (100, 102) während des weiteren Zurückfahrens des Spindelstocks (8) zwecks Freigabe des Werkzeugs (104) stillsteht.

7. Werkzeugmaschine nach einem der Ansprüche 1 bis 5, dadurch gekennzeichnet, daß die Halter (100, 102) durch die elastischen Spannmittel so lange in Anlage an dem Anschlag des Spindelstocks (8) gehalten werden, bis eine weitere Antriebsvorrichtung (91) auch bei ortsfestem Spindelstock (8) ein Verfahren der Halter (100, 102) bewirkt.

8. Werkzeugmaschine nach Anspruch 2 und 7, dadurch gekennzeichnet, daß die weitere Antriebsvorrichtung (91) einen am Spindelstock (8) fest angeordneten Druckmittelzylinder (93) aufweist, dessen Kolbenstange (95) am Träger mittelbar oder unmittelbar angreift.

9. Werkzeugmaschine nach Anspruch 8, dadurch gekennzeichnet, daß die Halter (102) durch Lenker (82, 83) mit dem Träger verbunden sind, daß an dem Träger ferner mindestens ein nach oben weisender Abschnitt (75, 75') angeordnet ist und daß die Kolbenstange (95) an dem Abschnitt (75') angreift.

10. Werkzeugmaschine nach einem der Ansprüche 1 bis 9, dadurch gekennzeichnet, daß ein Lenkerparallelogramm (82, 83, 74, 100) vorgesehen ist, bei dem zwei parallele Lenker (82, 83) in einer Spannposition im wesentlichen parallel zur Spindelachse (80) und unterschiedlich radial zu dieser beabstandet angeordnet sind, wobei ihre einen Enden am Träger um waagerechte Achsen (86) schwenkbar befestigt sind, und daß ihre anderen Enden am Halter (100, 102) schwenkbar befestigt sind.

11. Werkzeugmaschine nach einem der Ansprüche 1 bis 10, dadurch gekennzeichnet, daß zum Bewegen der Halter (100, 102) in die und aus der Werkzeugwechselstellung eine Kolben-Zylinder-Einheit (90) vorgesehen ist.

12. Werkzeugmaschine nach Anspruch 11, dadurch gekennzeichnet, daß die Kolben-Zylinder-Einheit (90) mit einem Ende am Träger und mit dem anderen Ende an einem Teil der Lenkerführung (82, 83) angreift.

**Claims**

1. Machine tool for the successive machining of workpieces with various tools (104, 104') which can be clamped into a spindle (12) of a spindle head (8) of the machine tool (1), wherein the spindle head (8) is held on a supporting element (5), orientated in two co-ordinate directions at right angles to the spindle axis (80) and movable relative to the workpiece, and can be moved together with this supporting element (5) in a direction parallel to the spindle axis (80), comprising a magazine (30) in which the tools (104, 104') are held in holders (100, 102) which are arranged in a distributed manner around the spindle axis (80), wherein each holder (100, 102) can be moved by means of a separate drive device into a position in alignment with the spindle axis (80) and into a position outside the spindle axis (80), wherein, moreover, the holders (100, 102) and the spindle (12) are displaceable relative to one another in the direction of the spindle axis (80), characterised in that the magazine (30) can be moved along the spindle axis (80) and, in the direction in which the tool (104, 104') is inserted into the spindle (12), is held on an axial stop of the spindle head (80) under the force of an elastic clamping means so that the holder (100, 102) of the tools (104, 104') to be changed or interchanged in each case follows the movements of the spindle head (8) between a tool-change position and a machining position at the workpiece and, during the work of the tool, remains in a position in alignment with the spindle axis (80) and remains in engagement with the tool (104, 104'), and that means are provided in order to lift the magazine (30) from the axial stop against the force of the elastic clamping means for the purpose of a tool change.

2. Machine tool according to Claim 1, characterised in that the holders (100, 102) are held on a common support.

3. Machine tool according to Claim 2, characterised in that the support has a tubular section (65) which is displaceably guided on an allocated tubular section (20) of the spindle head (8).

4. Machine tool according to Claim 3, characterised in that the stop is designed as a shoulder (24) of the spindle head (8).

5. Machine tool according to any one of Claims 1 to 4, characterised in that the elastic clamping means have at least one helical tension spring (22).

6. Machine tool according to any one of Claims 1 to 5, characterised in that the holders (100, 102) are held in contact with the stop of the spindle head (8) by the elastic clamping means until the spindle head (8) is located in a position moved out of the tool-change position in the direction of the spindle axis (80) towards the tool, and that, when the tool-change position is reached, the holder (100, 102) of the tool (104) to be changed comes into contact with a stop (116), acting in the direction of the spindle axis (80), in such a way that the holder (100, 102), during the further return movement of the spindle head (8), stops for the purpose of releasing the tool (104).

7. Machine tool according to any one of Claims 1 to 5, characterised in that the holders (100, 102) are held in contact with the stop of the spindle head (8) by the elastic clamping means until a further drive device (91) causes the holders (100, 102) to move even when the spindle head (8) is stationary.

8. Machine tool according to Claims 2 and 7, characterised in that the further drive device (91) has a pressure-medium cylinder (93) which is firmly arranged on the spindle head (8) and whose piston rod (95) acts indirectly or directly on the support.

9. Machine tool according to Claim 8, characterised in that holders (102) are connected to the support by control links (82, 83), that, moreover, at least one section (75, 75') pointing upwards is arranged on the support, and that the piston rod (95) acts on the section (75').

10. Machine tool according to any one of Claims 1 to 9, characterised in that a control-link parallelogram (82, 83, 74, 100) is provided in which two parallel control links (82, 83), in a clamping position, are arranged substantially parallel to the spindle axis (80) and at a different radial distance from the latter, one of their ends being pivotably fixed on the support about horizontal axes (86), and that their other ends are pivotably fixed on the holder (100, 102).

11. Machine tool according to any one of Claims 1 to 10, characterised in that a piston-cylinder unit (90) is provided for moving the holders (100, 102) into and out of the tool-change position.

12. Machine tool according to Claim 11, characterised in that the piston-cylinder unit (90) acts with one end on the support and with the other end on a part of the control-link guide (82, 83).

## Revendications

1. Machine-outil pour le travail consécutif de pièces avec des outils différents (104, 104'), qui peuvent être fixés dans un arbre (12) d'une poupée (8) de la machine-outil (1), dans laquelle la poupée (8) est maintenue sur un élément porteur (5) mobile par rapport à la pièce dans deux directions de coordonnées perpendiculaires à l'axe (80) de l'arbre et mobile avec ce dernier dans une direction parallèle à l'axe (80) de l'arbre, avec un magasin (30), dans lequel sont maintenus les outils (104, 104') dans des porte-outils (100, 102), qui sont répartis tout autour de l'axe (80) de l'arbre, chaque porte-outil (100, 102) peut être animé par un moteur propre dans une position alignée avec l'axe (80) de l'arbre et dans une position non alignée avec l'axe (80) de l'arbre, les porte-outils (100, 102) et l'arbre (12) étant de plus mobiles l'un par rapport à l'autre, dans la direction de l'axe (80) de l'arbre, caractérisée en ce que le magasin (30) est mobile le long de l'axe (80) de l'arbre et dans la direction d'introduction de l'outil (104, 104') dans l'arbre (12), est maintenu, sous la force d'un moyen de tension élastique, sur une butée axiale de la poupée (8), de sorte que le porte-outil (100, 102) de chaque outil (104, 104') à introduire ou à retirer pour être changé suit les mouvements de la poupée (8) entre une position de changement d'outil et une position de travail près de la pièce et, pendant le travail de l'outil, reste dans une position alignée avec l'axe (80) de l'arbre et en prise avec l'outil (104, 104') et que sont prévus des moyens, pour dégager, en vue du changement d'outil, le magasin (30) de la butée axiale contre la force du moyen de tension élastique.

2. Machine-outil selon la revendication 1, caractérisée en ce que les porte-outils (100, 102) sont maintenus sur un support commun.

3. Machine-outil selon la revendication 2, caractérisée en ce que le support présente une section tubulaire (65), qui peut coulisser sur une section tubulaire appropriée de la poupée (8).

4. Machine-outil selon la revendication 3, caractérisée en ce que la butée se présente sous la forme d'un épaulement (24) de la poupée (8).

5. Machine-outil selon l'une des revendications 1 à 4, caractérisée en ce que les moyens de tension élastique comprennent au moins un ressort hélicoïdal de traction (22).

6. Machine-outil selon l'une des revendications 1 à 5, caractérisée en ce que les porte-outils (100, 102) sont maintenus par les moyens de tension élastique contre la butée de la poupée (8), tant que la poupée (8) se trouve dans une position sur l'outil hors de la position de changement d'outil selon l'axe (80) de l'arbre en direction de l'outil, et que, lorsqu'il atteint la position de changement d'outil, le porte-outils (100, 102) de l'outil à changer (104) vient s'appuyer sur une butée (116) agissant dans la direction de l'axe (80) de l'arbre, de sorte que le porte-outils (100, 102) est arrêté pendant le nouveau retour de la poupée (8), pour libérer l'outil (104).

7. Machine-outil selon l'une des revendications 1 à 5, caractérisée en ce que les porte-outils (100, 102) sont maintenus par les moyens de tension élastique contre la butée de la poupée (8), tant qu'un autre moteur (91) effectue aussi, près de la poupée (8) fixée, un déplacement des porte-outils (100, 102).

8. Machine-outil selon la revendication 2 et 7, caractérisée en ce que l'autre moteur (91) présente un moyen de pression à piston (93), dont l'axe (95) est directement ou indirectement en prise sur le support.

9. Machine-outil selon la revendication 8, caractérisée en ce que les porte-outils (100, 102) sont reliés au support par des bras (82), (83), que sur le support est en outre disposée au moins une section (75, 75') tournée vers le haut et que l'axe de piston (95) est en prise sur la section (75').

10. Machine-outil selon l'une des revendications 1 à 9, caractérisée en ce qu'est prévu un système de bras à parallélogramme (82, 83, 74, 100), dans lequel deux bras parallèles (82, 83) sont dans une position de tension sensiblement parallèle à l'axe (80) de l'arbre et décalés de celui-ci radialement de manière différente, leurs premières extrémités sur le support étant fixées basculantes autour d'axes horizontaux, et leurs autres extrémités étant fixées basculantes sur le porte-outils (100, 102).

11. Machine-outil selon l'une des revendications 1 à 10, caractérisée en ce que, pour actionner les porte-outils (100, 102) dans et hors de la position de changement d'outil, est prévue une unité piston-cylindre (90).

12. Machine-outil selon la revendication 11, caractérisée en ce que l'unité piston-cylindre (90) est en prise par une extrémité sur le support et par l'autre extrémité sur une partie de la commande des bras (82, 83).

Fig. 1

Fig. 11

Fig. 12

Fig.2

*Fig.3*

*Fig. 4*

0 106 081

*Fig.5*

Fig.6

Fig.7

Fig.8

Fig.10

Fig.9